Europäisches Patentamt

European Patent Office

Office européen des brevets

(19)

(11) EP 0 869 335 A2

## (12) EUROPÄISCHE PATENTANMELDUNG

(43) Veröffentlichungstag:
07.10.1998 Patentblatt 1998/41

(51) Int. Cl.$^6$: G01F 1/36

(21) Anmeldenummer: 98105242.6

(22) Anmeldetag: 23.03.1998

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 02.04.1997 DE 19713668

(71) Anmelder:
WAGNER INTERNATIONAL AG
9450 Altstätten (CH)

(72) Erfinder:
• Seitz, Kurt
9443 Widnau (CH)
• Adams, Horst, Dr.
9016 St. Gallen (CH)
• Hasler, Markus
9462 Montlingen (CH)

(74) Vertreter:
Liesegang, Roland, Dr.-Ing.
FORRESTER & BOEHMERT
Franz-Joseph-Strasse 38
80801 München (DE)

(54) **Vorrichtung und Verfahren zum Messen und zum Regeln des Durchflusses eines Fluids**

(57) Die Erfindung betrifft eine Vorrichtung und ein Verfahren zum Messen und zum Regeln des Durchflusses eines Fluids. Bei dem Meßverfahren werden analoge Meßgrößen erfaßt, welche von einem Volumenstrom des Fluids abhängig sind, und die analogen Meßgrößen werden in digitale Werte umgewandelt, wobei die digitalen Werte mit einem Offsetwert korrigiert werden, der abhängig ist von einer Veränderung der Betriebsparameter analoger Komponenten des Meßsystems im Laufe des Betriebs des Meßsystems. Zur Ermittlung des Offsetwertes wird während Betriebsunterbrechungen, wenn der Volumenstrom null ist, eine analoge Meßgröße erfaßt und in einen digitalen Wert umgewandelt, der digitale Wert wird gespeichert und bei Wiederaufnahme des Betriebs als Offsetwert verwendet. Die Erfindung sieht ferner vor, die digitalen, korrigierten Meßgrößen einem digitalen Signalprozessor zuzuführen und die Regelung des Durchflusses digital durchzuführen. Für die digitale Regelund ist vorzugsweise wenigstens ein Parameterspeicher vorgesehen.

Fig. 1

Printed by Xerox (UK) Business Services
2.16.3/3.4

EP 0 869 335 A2

# Beschreibung

Die Erfindung betrifft die Messung und Regelung des Durchflusses eines Fluids.

Bekannt sind analoge Durchflußmeß- und Regeleinheiten, bei denen mit Hilfe einer Differenzdruckmessung über einer Blende in einem Strömungskanal eine Durchflußmenge gemessen wird und anschließend dieser Meßwert in einer Recheneinheit mit einem Sollwert verglichen wird. Bei Abweichungen des Istwertes vom Sollwert wird von der Recheneinheit ein Stellsignal an eine Proportionalventileinheit gesendet, welche einen Stellprozeß auslöst, so daß die gemessene Durchflußmenge mit dem Sollwert zur Deckung gebracht wird.

Bei den bekannten Durchflußmeß- und Regeleinrichtungen besteht das Problem, daß sie relativ unflexibel sind und nicht ohne weiteres an Änderungen der Systemkomponenten angepaßt werden können. Die Verarbeitung der Meß- und Regeldaten ist durch diese Systemkomponenten im wesentlichen vorgegeben. Während bei der Signalverarbeitung grundsätzlich die digitalen Komponenten weitgehend frei sind von Veränderungen der Betriebsparamenter, welche sich im Laufe des Betriebs (z.B. aufgrund der Alterung der Komponenten, thermische Driften etc.) ergeben können, werden die Sensoren, analoge Verstärkerstufen, analoge Vergleicher und dergleichen von solchen Driften beeinflußt.

Die vorliegende Erfindung hat daher zur Aufgabe, eine Vorrichtung oder ein Verfahren zum Messen und zum Regeln des Durchflusses eines Fluids anzugeben, welche eine erhöhte Störsicherheit des Meß- und Regelsystems, und maximale Flexibilität für die Beeinflussung der Meß- und Regeldaten bieten.

Diese Aufgabe wird durch ein Verfahren und eine Vorrichtung zum Messen bzw. zum Messen und Regeln des Durchflusses eines Fluids mit den Merkmalen der Ansprüche 1, 6, 8 bzw. 13 gelöst.

Die vorliegende Erfindung sieht somit Verfahren und Vorrichtungen vor, bei denen die Signale der Durchflußmessung weitgehend digital verarbeitet und einem digitalen Signalprozessor (DSP) zugeführt werden. Die Signale von der Durchflußmeßeinrichtung werden zunächst digital vorverarbeitet, so daß Meßunsicherheiten aufgrund einer Veränderung der analogen Meßkomponenten, wie einer thermischen Drift, weitgehend ausgeglichen werden. Die digitalen Werte werden mit einem Offsetwert korrigiert, der von einer Veränderung der Betriebsparameter analoger Komponenten des Meßsystems während Betriebs des Meßsystems abhängig ist.

Der korrigierte digitale Wert wird vorzugsweise linearisiert, so daß er proportional zu dem zu messenden Volumenstrom wird.

Der digitale Signalprozessor steuert dann aufgrund der Meßgrößen, vorzugsweise unter Zuhilfenahme von Informationen aus speziellen digitalen Speichereinheiten eine digitale Regeleinheit, welche ihrerseits über ein Stellglied eine Ventileinrichtung ansteuert. Die Regeleinheit enthält bei einer bevorzugten Ausführungsform einen PID-Regler, je nach Anwendungsfall kann jedoch auch ein Regler mit einer bliebigen Kombination aus P-, I- und D-Anteilen verwendet werden. Das Stellglied enthält vorzugsweise einen Pulsweitenmodulator; und die Ventileinrichtung enthält vorzugsweise ein Proportionalventil.

Somit kann der digitale Signalprozessor Parameter, welche für die Regelung und/oder die Erzeugung einer Stellgröße benötigt werden, während des Betriebs beeinflussen. Diese Parameter können gespeichert, berechnet und/oder von außen eingegeben werden.

Die weitgehend digitale Signalverarbeitung ermöglicht eine maximale Flexibilität und Störunempfindlichkeit des Meß- und Regelsystems.

Die analogen Meßgrößen werden in digitale Werte umgewandelt, die im digitalen Bereich mit einem Offsetwert korrigiert werden können, um eine Veränderung der analogen Betriebsparameter des Meßsystems im Laufe des Betriebs, insbesondere thermische Driften und dergleichen, auszugleichen. Der Offsetwert wird am einfachsten dadurch ermittelt, daß während Betriebsunterbrechungen, wenn der Volumenstrom null ist, eine analoge Meßgröße erfaßt und in einen digitalen Wert umgewandelt wird. Theoretisch müßte dieser digitale Wert bei einer Strömung von Null ebenfalls null sein. Wegen der genannten Veränderung oder Drift der analogen Komponenten ist dieser digitale Wert in der Regel jedoch ungleich null und kann direkt als Korrekturwert in einem Offsetspeicher abgelegt und bei der Wiederaufnahme des Betriebs verwendet werden.

Die digitale Signalverarbeitung bietet somit den Vorteil der erhöhten Störsicherheit. Auch die Möglichkeit der Einflußnahme auf die Meß- und Regeldaten ist wesentlich besser als bei analogen Systemen. So können in speziellen, vorzugsweise programmierbaren Speichereinrichtungen variable Betriebsparameter, insbesondere Tabellen oder Kennlinienfelder, gespeichert sein, auf welche der digitale Signalprozessor je nach Anlagentyp, Fluidart, Betriebsvorgaben und Betriebsbedingungen etc. zugreift. Auch für Störungen oder anomale Zustände des Betriebs und Betriebsunterbrechungen können spezielle Parameter, Kennlienien oder dergleichen für die Regelung bzw. Steuerung der Ventileinheit vorgesehen sein, wie später noch genauer erläutert ist.

Schließlich kann auch vorgesehen sein, daß die notwendigen Betriebsparmeter von außen eingegeben bzw. verändert werden.

Die Erfindung ist im folgenden anhand bevorzugter Ausführungsformen mit Bezug auf die Zeichnungen näher erläutert. In den Figuren zeigen:

Fig. 1    Eine bevorzugte Ausführungsform der Durchflußmeßvorrichtung gemäß der vorliegenden Erfindung und

Fig. 2    eine bevorzugte Ausführungsform der Durchflußregelvorrichtung gemäß der vorliegenden Erfindung, welche mit der Durchflußmeßvorrichtung zusammenarbeitet.

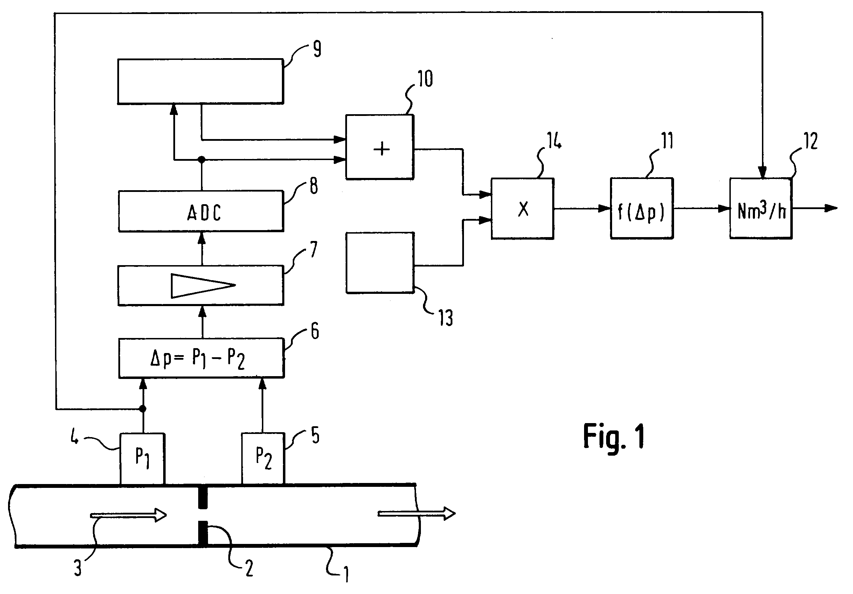

Figur 1 zeigt ein schematisches Blockschaltbild der erfindungsgemäßen Durchflußmeßvorrichtung, oder $\Delta p$-Einheit. In Figur 1 sieht man einen Strömungskanal 1, in dem sich eine Blende oder Querschnittsverengung 2 befindet. In dem Strömungskanal strömt ein gasförmiges oder flüssiges Medium (Fluid), in der durch den Pfeil 3 angegebenen Richtung. In der Wandung des Strömungskanals befindet sich stromaufwärts der Blende 2 ein erster Drucksensor 4, mit dem der Druck $P_1$ in dem Strömungskanal 1 vor der Blende 2 gemessen wird. Stromabwärts der Blende 2 befindet sich ein zweiter Drucksensor 5, mit dem der Druck $P_2$ in dem Strömungskanal 1 direkt hinter der Blende 2 gemessen wird.

Die Drucksensoren oder Druckmeßgeräte 4 und 5 wandeln die gemessenen Drücke in analoge elektrische Signale um, welche in einen Differenzverstärker 6 eingespeist werden. In dem Differenzverstärker 6 wird die Differenz $\Delta p = P_1 - P_2$ der beiden Drucksignale gebildet. Dabei ist bei bekanntem Querschnitt A des Strömungskanals 1 die Druckdifferenz $\Delta p$ ein Maß für den Volumenstrom des durch den Strömungskanal strömenden Mediums.

Das von dem Differenzverstärker 6 abgegebene Signal wird in einen Analogverstärker 7 eingespeist, der die Signalamplitude in einen Bereich verstärkt, der für einen nachfolgenden Analog-Digital-Wandler (ADC) 8 optimal ist. Der Analog-Digital-Wandler 8 wandelt nun das bisher analoge Differenzdrucksignal in einen digitalen Wert um.

Während die nachfolgenden digitalen Komponenten der Meßvorrichtung, die unten noch beschrieben sind, frei sind von thermischen Driften und dergleichen, leiden die analogen Komponenten des Meßsystems, insbesondere die Sensoren 4 und 5 und die analogen Verstärkerstufen 6 und 7, unter einer Veränderung ihrer Betriebsparameter im Laufe des Betriebs des Meßsystems. Sie werden beeinflußt durch thermische Driften, Alterung, Fehljustierungen und Verstellungen etc. Um diese Veränderung der Betriebsparameter der analogen Komponenten auszugleichen, sieht die vorliegende Erfindung einen Offsetspeicher 9 vor.

Der Offsetspeicher 9 speichert bei Betriebsunterbrechungen, d.h. wenn keine Fluidströmung vorhanden ist, den vom Analog-Digital-Wandler abgegebenen Wert. Hierzu wird während dieser Betriebsunterbrechungen wenigstens eine analoge Meßgröße aufgenommen. Im Idealfall soll dieser digitale Wert beim Fehlen einer Fluidströmung null sein. Wegen der genannten Driften der analogen Komponenten ist dieser Wert in der Regel jedoch ungleich null, und er kann praktisch als ein Korrekturwert herangezogen werden. Der digitale Wert für den Volumenstrom Null wird im offsetspeicher 9 gespeichert.

Wenn nun die Fluidströmung wieder einsetzt, wird der im Offsetspeicher 9 abgelegte Offsetwert invertiert und ausgelesen. Der Offsetwert, mit dem invertierten Vorzeichen, wird in einen Addierer 10 eingegeben und zu dem vom Analog-Digital-Wandler abgegebenen Wert addiert. Somit wird der von dem Drift abhänige Offsetwert von dem der Meßgröße entsprechenden Digitalwert subtrahiert, so daß im wesentlichen nur das reine Meßsignal weiterverarbeitet wird.

Die für den Abgleich, d.h. für die Aufnahme des von der Drift abhängigen Offsetwertes, notwendige Unterbrechung des Strömungsbetriebs kann zu beliebigen Zeiten erfolgen. Der Abgleich wird entweder vorgenommen, während eine natürliche Betriebsunterbrechung auftritt, oder die Unterbrechung kann aktiv gesteuert in bestimmten Zeitintervallen ausgelöst werden. Die Strömungsunterbrechung wird mit Hilfe einer unten noch beschriebenen Proportionalventileinheit bewirkt.

Da der Volumenstrom keine lineare Funktion des Differenzdrucks $\Delta p$ an der Blende 2 ist, wird das (korrigierte) Signal aus dem Analog-Digital-Wandler 8 in eine Linearisierungsstufe 11 eingespeist, welcher eine Normierungsstufe 12 nachgeschaltet ist, so daß am Ausgang der Meßvorrichtung nach einer Linearisierung in der Linearisierungsstufe 11 und einer Normierung, beispielsweise auf einen am Druckmeßgerät 4 gemessenen Eingangsdruck $P_1$, in der Normierungsstufe 12 ein Signal zur Verfügung steht, welches den Volumenstrom des Fluids im Strömungskanal 1 in Normmeter$^3$/Stunde (Nm$^3$/h) wiedergibt.

Zusätzlich zu dem beschriebenen Offsetspeicher 9 kann die Meßeinrichtung einen Skalier- oder Kalibrierspeicher 13 aufweisen, in dem Kalibrierparameter gespeichert sind, welche es ermöglichen, bei einem Austausch der Blende 2 den von der Normiereinheit 12 ausgegebenen Meßwert wieder auf den tatsächlichen Volumenstrom des Fluids zu kalibrieren. Dies ist besonders günstig, wenn Fertigungstoleranzen der Blendenöffnung ausgeglichen werden sollen; in diesem Fall wird die Meßvorrichtung in Bezug auf eine externe Kalibriereinrichtung geeicht, und die notwendigen Korrekturwerte werden digital in dem Kalibrierspeicher 13 abgelegt. Die in dem Kalibrierspeicher 13 gespeicherten Korrekturverte werden dem digitalen Meßsignal über einen Multiplizierer aufgeprägt.

Die erfindungsgemäße Meßvorrichtung hat gegenüber dem Stand der Technik den großen Vorteil, daß durch die weitgehend digitale
Signalverarbeitung Veränderungen der Betriebsparameter der analogen Komponenten, die im Laufe des Betriebs der Meßvorrichtung auftreten, mit Hilfe des Offsetspeichers 9 ausgeglichen werden können. Diese Veränderungen betreffen insbesondere thermische Driften, Alterung der Komponenten und dergleichen. Ferner kann in das Meßsystem leicht eine Kalibrierung auf verschiedene Blendendurchmesser, Strömungskanaldurchmesser, Druckmessereigenschaften oder andere anlagenspezifische Hardwareparameter sowie die Fluideigenschaften vorgenommen werden. Hierfür werden einfach entsprechende Parametersätze und Korrekturwerte im Kalibrierspeicher 13 abgelegt. Es kann auch vorgesehen werden, den Kalibrierspeicher nachträglich von außen mit Korrekturwerten zu laden.

Durch die obige Merkmalskombination erhält man ein extrem störunempfindliches und flexibles Meßsystem.

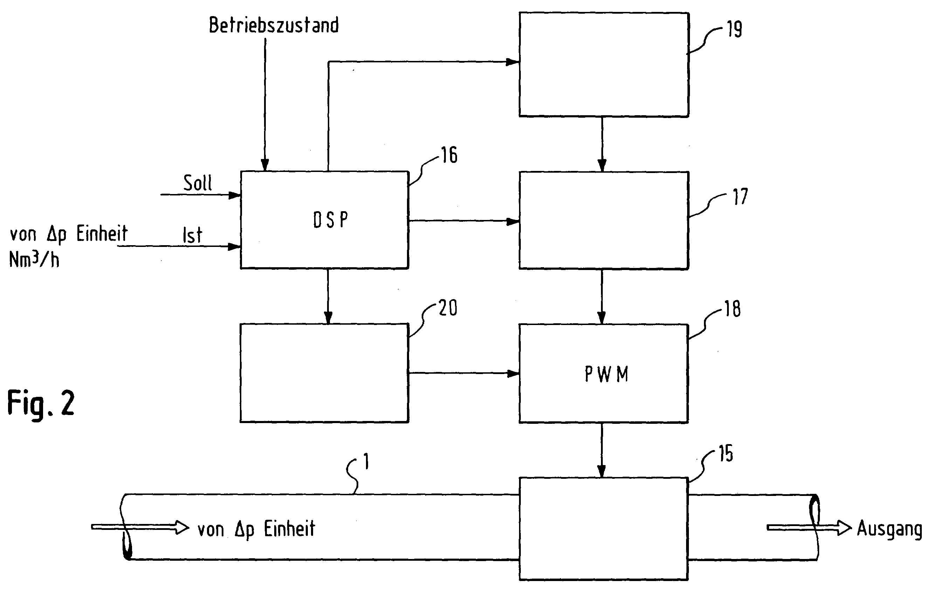

Figur 2 zeigt eine Prinzipskizze der digitalen Durchflußvorrichtung für Gase und Flüssigkeiten, welche vorzugsweise in Kombination mit der Durchflußmeßvorrichtung von Figur 1 arbeitet. Sie erhält die nötigen Durchfluß-Istwerte aus der beschriebenen Durchflußmeßvorrichtung in digitaler Form, welche vorzugsweise, wie beschrieben, vorverarbeitet sind. Die Durchflußregelvorrichtung der Figur 2 verarbeitet diese Signale digital weiter, um eine Proportionalventileinheit 15 anzusteuern, welche den Volumenstrom des gasförmigen oder flüssigen Mediums (Fluids) im Strömungskanal 1 kontrolliert.

Die erfindungsgemäße Durchflußregelvorrichtung hat als Grundkomponenten einen digitalen Regler 17 und ein Stellglied 18. Der Regler 17 ist vorzugsweise ein PID-Regler, wobei durch eine geeignete Einstellung der P-, I- und D-Anteile auch ein Proportionalregler, ein PI-Regler etc. realisiert werden kann. Das Stellglied 18 enthält vorzugsweise einen Pulsweitenmodulator, der Steuersignale an das Proportionalventil 15 ausgibt. Selbstverständlich kann an

Stelle des Proportionalventils auch eine andere geeignete Ventilvorrichtung eingesetzt werden.

Bei der bevorzugten Ausführungsform der digitalen Durchflußregelung ist zustäzlich wenigstens eine Speichereinrichtung zum Speichern variabler Betriebsparameter vorgesehen, welche Stellparameter für den Pulsweitenmodulator 18 und/oder Regelparameter für den Regler 17 enthält. Diese Speichereinrichtung ist vorzugsweise programmierbar, und es kann auch vorgesehen sein, daß Betriebsparameter von außen in die Speichereinrichtung eingegeben werden. Hierfür wird der digitale Signalprozessor 16 vorzugsweise in ein externes Netzwerk eingebunden.

Bei der in Figur 2 gezeigten Ausführungsform umfaßt die Speichereinrichtung einen Regelparameter-Speicher 19 und einen Stellparameter-Speicher 20. In der konkreten Ausgestaltung ist der Regelparameter-Speicher 19 ein PID-Einstellungsspeicher, und der Stellparameter-Speicher 20 ist ein PWM-Einstellungspeicher. Die Verbindung der einzelnen Komponenten ergibt sich aus Figur 2.

Die Durchflußregelung läuft wie folgt ab. Der digitale Durchfluß-Istwert von der Durchflußmeßvorrichtung der Figur 1, gegebenenfalls korrigiert, linearisiert und normiert, wird in den digitalen Signalprozessor (DSP) 16 eingegeben. An einem zweiten Eingang des DSP 16 kann ein Sollwert für den Durchfluß eingegeben werden. Der DSP 16 vergleicht nun den Sollwert mit dem Istwert und erzeugt ein der Differenz zwischen dem Sollwert und dem Istwert entsprechendes digitales Ausgangssignal, welches in den nachgeschalteten Regler 17 eingespeist wird. Der Regler 17 erzeugt ein entsprechendes Steuersignal für die nachgeschaltete Pulsweitenmodulationseinheit (PWM) 18, welche wiederum die Proportionalventileinheit 15 ansteuert.

Für den Regelvorgang können die proportionalen, integralen und differentiellen Anteile der Regelcharakteristik des Reglers 17 entweder direkt vom DSP 16 vorgegeben oder aus dem zusätzlichen PID-Einstellungsspeicher 19 abgerufen werden. Letzteres ist insbesondere dann sinnvoll, wenn die Regelcharakteristik der Durchflußregelvorrichtung an eine bestimmte Anlagenkonfiguration angepaßt werden soll. In diesem Fall werden die Regelparameter vorzugsweise bei Inbetriebnahme der Anlage einmal optimiert und dann fest digital im PID-Einstellungsspeicher 19 abgelegt. Diese Vorgehensweise wird als statische Methode bezeichnet.

Bei einem alternativen Konzept, welches als dynamische Methode bezeichnet wird, werden die optimalen proportionalen, integralen differentiellen Anteile für den Regler 17 jeweils abhängig vom Betriebszustand ermittelt. Hierzu wird mit Hilfe eines Betriebszustandssignals, das aus einem Teil der Anlage oder auch aus einem externen Netzwerk in den DSP 16 eingegeben wird, von dem digitalen Signalprozessor 16 ein Betriebszustand ermittelt. Abhängig von diesem Betriebszustand kann der DSP 16 die Proportionalen, integralen und differentiellen Anteile, d.h. die Parameter, für den Regler 17 entweder selbst berechnen oder auf entsprechende Werte in dem PID-Einstellungspeicher 19 zugreifen, um den Regler 17 richtig einzustellen.

Es ist daher zweckmäßig, daß der PID-Einstellungsspeicher mehrere Parametersätze, bzw. Kennlinienfelder für die Betriebszustände etc. enthält.

Natürlich können die statische Methode und die dynamische Methode auch in Kombination eingesetzt werden, indem z.B. im Normalbetrieb die Parametervorgaben für den Regler 17 aus dem PID-Einstellungs-Speicher 19 entnommen werden, und bei Sonderbetriebszuständen (etwa beim Anlauf der Anlage, extremen Abweichungen des Istwertes vom Sollwert oder Störungen der Anlage) übernimmt der digitale Signalprozessor 16, sobald dieser Sonderbetriebszustand gemeldet ist, die Festlegung der Regelcharakteristik.

Für die Ansteuerung des Proportionalventils 15 ist, wie gesagt, ein Pulsweitenmodulator 18 vorgesehen. Diesem ist bei der in Figur 2 gezeigten Ausführungsform ein Pulsweitenmodulator-Einstellungsspeicher 20 zugeordnet. In diesem werden bestimmte Ansteuerfunktionen des Pulsweitenmodulators 18 gespeichert, auf welche, abhängig von den im DSP 16 ermittelten Betriebszuständen, direkt zugegriffen werden kann, um so die Pulsweitenmodulatoreinheit 18, d.h. das Stellglied, direkt in Bezug auf diese Betriebszustände anzusteuern. Das Vorsehen des PWM-Einstellungsspeichers 20 erspart den Umweg über die Berechnung oder Vorgabe der PID-Parameter für den Regler 17 und deren Umsetzung in dem Regler. Dies kann z.B. dann besonders sinnvoll sein, wenn es erforderlich ist, den Durchfluß für eine kurze Zeit vollständig abzuschalten (z.B. zur Ermittlung der Driftkorrekturwerte für den Offsetspeicher 9 aus Figur 1), und wenn danach sofort wieder zu den vor der Abschaltung geltenden Regelwerten zurückgekehrt werden soll.

Ohne eine entsprechende Vorgabe der Werte aus dem PWM-Einstellungsspeicher 20 würde in diesem Fall wegen der großen Differenz zwischen Soll- und Istwert beim Wiedereinschalten zunächst der differentielle Teil des PID-Reglers 17, danach der proportionale und dann der integrale Teil aktiviert, was eine erhebliche zeitliche Verzögerung bedeuten würde, bis die Sollwertvorgabe von der Porportionalventileinheit 15 wieder erreicht ist. Mit Hilfe des PWM-Einstellungspeichers 20 kann nun der digitale Signalprozessor 16 in einem solchen Fall sofort den passenden Einstellwert für den gewünschten Betriebszustand abfragen und direkt in die PWM-Einheit 18 einspeisen. Dies führt zu einem sehr schnellen Erreichen des gewünschten Betriebszustands.

Natürlich können auch andere Parametersätze der Pulsweitenmodulatoreinheit 18 in dem PWM-Einstellungsspeicher 20 abgelegt werden, um abhängig von bestimmten, dem digitalen Signalprozessor 16 gemeldeten Betriebszuständen eine direkte Steuerfunktion auszulösen.

Der PID-Einstellungspeicher 19 dient somit in erster Linie zum Speichern und schnellen Abrufen von PID-Reglerparametern für den Regler 17, insbesondere um die Regelcharakteristik der Durchflußregelvorrichtung an bestimmte Anlagenkonfigurationen anzupassen. Dagegen dient der PWM-Einstellungsspeicher zum Speichern und schnellen Abrufen von Pulsweitenmodulationsparametern, insbesondere um bei besonderen Betriebszuständen oder Störungen der Anlage eine schnelle, gezielte Steuerung des Proportionalventils 15 vorzusehen. Es kann vorgesehen sein, daß diese Steuerung über den PWM-Einstellungsspeicher höhere Priorität hat als die Eingabe der Stellgrößen von dem Regler 17.

Bestimmte Betriebszustände, aber auch Parametersätze für die beiden Speicher 18 und 19 können über ein übergeordnetes Netzwerk eingegeben werden.

Die in der vorstehenden Beschreibung, den Ansprüchen und der Zeichnung offenbarten Merkmale können sowohl einzeln als auch in beliebiger Kombination für die Verwirklichung der Erfindung in ihren verschiedenen Ausgestaltungen von Bedeutung sein. Insbesondere können die hier beschriebenen Vorrichtungen und Verfahren zum Messen und zum Regeln des Durchflusses eines Fluids sowohl getrennt als auch, vorzugsweise, in Kombination verwendet werden, um eine weitgehend vollständig digitale Messung und Regelung des Durchflusses zu erreichen.

**Patentansprüche**

1. Verfahren zum Messen des Durchflusses eines Fluids mit einem Meßsystem, bei dem analoge, vom Volumenstrom des Fluids abhängige Meßgrößen erfaßt und in digitale Werte umgewandelt werden, dadurch **gekennzeichnet**, daß die digitalen Werte mit einem Offsetwert korrigiert werden, der von einer Veränderung der Betriebsparameter analoger Komponenten (4, 5, 6, 7) des Meßsystems während des Betriebs des Meßsystems abhängig ist.

2. Verfahren nach Anspruch 1, dadurch **gekennzeichnet**, daß während Betriebsunterbrechungen, bei denen der Volumenstrom des Fluids null ist, eine analoge Meßgröße erfaßt und in einen digitalen Wert umgewandelt wird und der digitale Wert gespeichert wird, und daß bei Wiederaufnahme des Betriebs der gespeicherte digitale Wert als Offsetwert verwendet wird.

3. Verfahren nach Anspruch l oder 2, dadurch **gekennzeichnet**, daß während des Betriebs der Offsetwert von jedem digitalen Wert subtrahiert wird.

4. Verfahren nach einem der vorangehenden Ansprüche, dadurch **gekennzeichnet**, daß der korrigierte digitale Wert abhängig von Hardware-Komponenten (2) des Meßsystems kalibriert wird.

5. Verfahren nach einem der vorangehenden Ansprüche, dadurch **gekenzeichnet**, daß als analoge Meßgröße eine Druckdifferenz in einem von dem Fluid durchströmten Strömungskanal (1) zwischen zwei Meßpunkten, welche stromabwärts bzw. stromaufwärts einer Meßblende (2) liegen, ermittelt wird.

6. Verfahren zum Messen und Regeln des Durchflusses eines Fluids, insbesondere mit einem Meßverfahren nach einem der vorangehenden Ansprüche, dadurch **gekennzeichnet**, daß die Meßgrößen der Durchflußmessung digital vorverarbeitet und einem digitalen Signalprozessor (16) zugeführt werden und die Regelung des Durchflusses digital durchgeführt wird.

7. Verfahren nach Anspruch 6, dadurch **gekennzeichnet**, daß zur Erzeugung einer Stellgröße eine Pulsweitenmodulation durchgeführt wird.

8. Durchflußmeßvorrichtung für ein Fluid mit einer Einrichtung (2, 4-7) zum Erfassen analoger Meßgrößen, welche von einem Volumenstrom des Fluids abhängig sind, und einem Analog-Digital-Wandler (8) zum Umwandeln der analogen Meßgrößen in digitale Werte, **gekennzeichnet** durch eine Offset-Einrichtung (9) zum Korrigieren jedes digitalen Wertes mit einem Offsetwert, der abhängig ist von einer Veränderung der Betriebsparameter analoger Komponenten (4, 5, 6, 7) der Meßvorrichtung im Laufe des Betriebs der Meßvorrichtung.

9. Vorrichtung nach Anspruch 8, dadurch **gekennzeichnet**, daß die Offset-Einrichtung einen Offsetspeicher (9) aufweist, in dem wenigstens ein digitaler Wert gespeichert ist, der aus einer analogen Meßgröße für einen Bezugsvolumenstrom abgeleitet ist.

10. Vorrichtung nach einem der Ansprüche 8 bis 9, **gekennzeichnet** durch einen Subtrahierer (10) zum Subtrahieren des Offsetwertes von jedem digitalen Wert während des Betriebes der Meßvorrichtung.

11. Vorrichtung nach einem der Ansprüche 8 bis 10, **gekennzeichnet** durch eine Kalibriereinrichtung (13) und eine Linearisiereinrichtung.

12. Vorrichtung nach einem der Ansprüche 8 bis 11, dadurch **gekennzeichnet**, daß die Einrichtung zum Erfassen der analogen Meßgrößen eine Druckdifferenz-Meßeinrichtung ist, mit einer Meßblende (2) in einem von dem Fluid durchströmten Strömungskanal und mit Drucksensoren (4, 5) bei zwei Meßpunkten, welche stromabwärts bzw. stromaufwärts der Meßblende liegen.

13. Vorrichtung zum Messen und Regeln des Durchflusses eines Fluids, insbesondere mit einer Durchflußmeßvorrichtung nach einem der Ansprüche 8 bis 12, **gekennzeichnet** durch Mittel (9-14) zum digitalen Vorverarbeiten der Meßgrößen und einen digitalen Signalprozessor (16) für die zentrale Steuerung der Durchflußregelung.

14. Vorrichtung nach Anspruch 13, **gekennzeichnet** durch eine Ventileinrichtung (15), ein Ventil-Stellglied (18) zum Ansteuern der Ventileinrichtung und Stellparameter-Einstellmittel (20) zum Verändern von Parametern des Ventil-Stellgliedes.

15. Vorrichtung nach einem der Ansprüche 13 bis 14, dadurch **gekennzeichnet**, daß der digiale Signalprozessor (16) mit einem übergeordneten Netzwerk zur Eingabe von Betriebsparametern koppelbar ist.

Fig. 1

Fig. 2